# EUROPÄISCHE PATENTSCHRIFT

(11) **EP 0 847 347 B1**
(45) Veröffentlichungstag und Bekanntmachung des Hinweises auf die Patenterteilung: **27.10.1999**
(21) Anmeldenummer: 96924821.0
(22) Anmeldetag: 29.06.1996
(51) Int. Cl.: B60S 1/40

(54) **LÖSBARE WISCHARM-WISCHBLATTVERBINDUNG AN EINEM FAHRZEUGSCHEIBENWISCHER**
RELEASABLE WIPER ARM-WIPER BLADE CONNECTION ON A VEHICLE WINDSHIELD WIPER
ASSEMBLAGE AMOVIBLE D'UN BRAS DE MONTURE ET D'UNE RACLETTE D'ESSUIE-GLACE D'UN VEHICULE

(30) Priorität: 07.09.1995 DE 19533030
(43) Veröffentlichungstag der Anmeldung: 17.06.1998
(73) Patentinhaber: ITT Automotive Europe GmbH, 60488 Frankfurt (DE)
(72) Erfinder: SCHOLL, Wolfgang, D-74376 Gemmrigheim (DE); SCHMID, Eckhardt, D-74336 Brackenheim (DE); EGNER-WALTER, Bruno, D-74076 Heilbronn (DE)
(74) Vertreter: Dreiss, Fuhlendorf, Steimle & Becker
(86) Internationale Anmeldenummer: EP9602853
(87) Internationale Veröffentlichungsnummer: WO9709210

(56) Entgegenhaltungen:
- DE-A- 2 105 773
- DE-A- 2 816 206
- FR-A- 2 133 340
- GB-A- 1 100 069
- US-A- 4 354 293

## Beschreibung

Die Erfindung bezieht sich auf eine Wischarm-Wischblattverbindung an einem Fahrzeugscheibenwischer mit den Merkmalen des Oberbegriffs des Anspruchs 1.

Die Erfindung geht aus von einer Wischarm-Wischblattverbindung eines Fahrzeugscheibenwischers, bei welcher das Wischblatt einen Tragbügel zur Führung einer Wischleiste aufweist, der wiederum einen Verbindungabschnitt zum schwenkbaren Verbinden mit einem hakenförmig gekrümmten Wischarmende besitzt. Die FR-A-2,133,340 zeigt eine Vorrichtung, bei der die als Gelenkbolzen dienende Schraube in den koaxialen Bohrungen in den Seitenwänden des Wischblattbügels gelagert und durch eine Mutter axial gesichert ist. Das hakenförmige Wischarmende umgreift ein Verbindungsstück und ist mit diesem, beispielsweise rastend, verbindbar. Das Verbindungsstück ist auf einem Gelenkbolzen schwenkbar gelagert, welcher sich quer zwischen zwei an dem Tragbügel des Wischblatts vorgesehenen, voneinander beabstandeten, parallelen Seitenwänden erstreckt, die den Verbindungsabschnitt des Tragbügels bilden.

Bei derartigen Wischarm-Wischblattverbindungen, die beispielsweise aus der DE B-25 15 388 oder aus der EP-A-455 520 oder der DE-C-36 18 326 bekannt sind, besteht ein wesentlicher Nachteil in der etwas umständlichen und teilweise komplizierten Handhabung bei einem erforderlichen Wischblattwechsel. Das Wischblatt muß hierbei gegenüber dem Wischarm aus seiner Arbeitsstellung verdreht werden, das Wischblatt muß dann in Längsrichtung des Wischarmes verschoben werden, um das Verbindungsstück vom Wischarm zu lösen bzw. mit diesem zu verbinden, und das Verbindungsstück muß je nach seiner speziellen Ausgestaltung eventuell nach nochmaligem Verdrehen auf dem Gelenkbolzen von dem Gelenkbolzen entfernt bzw. auf den Gelenkbolzen aufgerastet werden. Das kann dazu führen, daß ein Autofahrer einen eigentlich erforderlichen Wischblattwechsel, der sich bei am Fahrzeug angebautem Wischarm oft noch schwieriger gestaltet, hinausschiebt.

Es sind auch schon Wischarm-Wischblattverbindungen bekannt, bei denen ein an dem hakenförmigen Ende des Wischarmes angebrachtes Verbindungsstück von oben her in den Verbindungsabschnitt des Wischblatttragbügels einführbar und auf dem Gelenkbolzen verrastbar ist. Eine solche Lösung, die beispielsweise aus der EP-A-03 19 161 bekannt ist, ermöglicht zwar eine etwas einfachere Handhabung beim Wischblattwechsel, jedoch besteht hier die Gefahr, daß, insbesondere nach mehrmals erfolgtem Wischblattwechsel, die Rastverbindung zwischen dem Verbindungsstück und dem Tragbügel verschlissen ist und keine ausreichend sichere Verbindung mehr gewährleistet. Beim Abklappen des Wischhebels von der Fahrzeugscheibe, beispielsweise zum Reinigen der Fahrzeugscheibe, kann dann das Wischblatt vom Wischarm abfallen.

Ausgehend von der FR-A-2,133,340 liegt der Erfindung die Aufgabe zugrunde, eine Wischarm-Wischblattverbindung der eingangs beschriebenen Art so weiterzuentwickeln, daß eine einfache Handhabung beim Wischblattwechsel und außerdem eine sichere Verbindung zwischen Wischarm und Wischblatt gewährleistet ist.

Erfindungsgemäß wird diese Aufgabe durch eine lösbare Wischarm-Wischblattverbindung mit den Merkmalen des Anspruchs 1 gelöst.

Das mit dem Wischarm zu verbindende Wischblatt besitzt einen Tragbügel, welcher einen Verbindungsabschnitt zum schwenkbaren Verbinden mit einem an dem Wischarm vorgesehenen Verbindungsstück aufweist. Der Verbindungsabschnitt des Tragbügels wird von einer ersten und einer zweiten Seitenwand gebildet, die voneinander beabstandet sind und parallel zueinander verlaufen. Das an dem Wischarm befindliche Verbindungsstück ist zwischen den beiden Seitenwänden des Verbindungsabschnittes relativ zum Tragbügel um eine quer zu den beiden Seitenwänden des Verbindungsabschnittes verlaufende geometrische Achse verdrehbar anzuordnen und mit dem Tragbügel zu verbinden. Das Verbindungsstück weist eine koaxial zu der geometrischen Achse angeordnete Durchgangsbohrung auf. Die erste Seitenwand des Verbindungsabschnittes besitzt eine koaxial zu der geometrischen Achse angeordnete erste Durchgangsbohrung und die zweite Seitenwand des Verbindungsabschnittes besitzt eine koaxial zu der geometrischen Achse angeordnete zweite Bohrung. Diese zweite Bohrung in der zweiten Seitenwand kann eine einfach herstellbare Durchgangsbohrung sein. Sie kann aber auch sacklochartig ausgebildet sein, so daß die sichtbare Außenseite der zweiten Seitenwand des Verbindungsabschnittes geschlossen ist. Eine als Gelenkbolzen dienende Schraube ist durch die erste Durchgangsbohrung in der ersten Seitenwand hindurchgesteckt und derartig in der Durchgangsbohrung des Verbindungsstückes angeordnet, daß der Tragbügel relativ zum Wischarm um die geometrische Achse verdrehbar ist.

Diese Wischarm-Wischblattverbindung ist so gestaltet, daß sie eine einfache Handhabung beim Wischblattwechsel ermöglicht. Zur Ausführung eines Wischblattwechsels muß nur die als Gelenkbolzen dienende Schraube herausgeschraubt und entnommen werden, danach wird das Wischblatt nach unten bzw. nach oben von dem am Wischarm gehaltenen Verbindungsstück abgenommen. Die Entnahmerichtung des Wischblattes vom Verbindungsstück ist hierbei abhängig davon, ob das Verbindungsstück von oben oder von unten in den Verbindungsabschnitt des Tragbügels eintaucht. Das Austauschwischblatt wird in entgegengesetzter Richtung mit seinem Verbindungsabschnitt auf das Verbindungsstück aufgesteckt und die Durchgangsbohrung des zwischen den Seitenwänden des Verbindungsabschnittes befindlichen Verbindungsstückes wird koaxial zu den Lagerbohrungen in den Seitenwänden des Verbindungsabschnittes ausgerichtet. Nunmehr wird die als Gelenkbolzen dienende Schraube koaxial in die erste Durchgangsbohrung und die zweite Bohrung des Verbindungsabschnittes sowie in die Durchgangsbohrung des Verbindungsstückes eingebracht und dabei entweder mit dem Verbindungsstück oder mit dem Tragbügel festsitzend verschraubt.

Dabei ist erfindungsgemäß vorgesehen, daß die Durchgangsbohrung in dem Verbindungsstück als Lagerbohrung für einen entsprechenden mittleren zylindrischen Lagerabschnitt der als Gelenkbolzen dienenden Schraube ausgebildet ist. Die Schraube selbst ist an ihrem vorderen Ende mit einem Gewindeabschnitt ausgestattet, der so in die zweite Bohrung des Verbindungsabschnittes am Tragbügel einschraubbar ist, daß ein ausreichend starker, lösbarer Kraftschluß zwischen der Schraube und dem Tragbügel des Wischblattes entsteht. In diesem Fall ist die Wischarm-Wischblattverbindung so gestaltet, daß die in der Durchgangsbohrung des Verbindungsstückes gelagerte Schraube gemeinsam mit dem Tragbügel verdrehbar ist.

Der lösbare Kraftschluß zwischen Schraube und Tragbügel kann gemäß Anspruch 2 in vorteilhafter Weise dadurch erreicht werden, daß der Durchmesser des in die zweite Bohrung des Verbindungsabschnittes eingeschraubten Gewindeabschnittes der Schraube kleiner ist, als der Durchmesser ihres zylindrischen Lagerabschnittes. Die Stirnseite des zylindrischen Lagerabschnittes der Schraube liegt hierbei kraftschlüssig an der Innenseite der zweiten Seitenwand des Verbindungsabschnittes des Tragbügels an, in welcher sich die mit Innengewinde ausgebildete zweite Bohrung befindet. Falls diese zweite Bohrung gemäß Anspruch 4 als Sacklochbohrung ausgebildet ist, kann stattdessen die vordere Stirnseite der Schraube kraftschlüssig am Grund dieser Bohrung anliegen.

Eine Ausgestaltung gemäß Anspruch 3 hat neben dem vorteilhaften Münzschlitz im Schraubenkopf noch den Vorteil, daß die als Gelenkbolzen dienende Schraube außerdem die erste und die zweite Seitenwand des Verbindungsabschnittes des Tragbügels in ihrem vorgeschriebenen Abstand voneinander fixiert und ein seitliches Auslenken dieser Seitenwände verhindert. Dadurch wird eine verbesserte seitliche Führung des Verbindungsstückes in dem Verbindungsabschnitt bzw. des Wischblattes am Wischarm erreicht, wodurch die Wischqualität verbessert ist.

Eine vorteilhafte Ausgestaltung gemäß Anspruch 5 sieht vor, daß das Verbindungsstück ein separat angefertigtes Bauteil ist, welches in der Art bekannter Verbindungsstücke mit dem hakenförmig umgebogenen Ende einer Wischstange, vorzugsweise rastend, verbunden ist. Diese Variante ist insbesondere dann von Vorteil, wenn das Verbindungsstück so gestaltet ist, daß es mit verschiedenen, auf dem Markt befindlichen Typen von Hakenwischarmen verbindbar ist.

Eine andere Ausgestaltung gemäß Anspruch 7 sieht vor, daß das Verbindungsstück direkt an die Wischstange eines Wischarmes angegossen bzw. durch Spritzgießen angespritzt ist. Dadurch ergibt sich eine dauerhafte feste einstückige Verbindung von Wischarm und Verbindungsstück. Der besondere Vorteil besteht darin, daß in diesem Fall die Notwendigkeit entfällt, das Verbindungsstück als separates Teil in einer gesonderten Handhabung mit dem Wischarm zu verbinden bzw. zwecks Austauschs von diesem zu entfernen. In diesem Zusammenhang sei darauf hingewiesen, daß bei Anwendung dieser Variante das freie Ende der Wischstange nicht unbedingt hakenförmig gebogen sein muß, weil bei an die Wischstange angespritztem Verbindungsstück ohnehin eine stabile Verbindung zwischen Wischstange und Verbindungsstück erreicht wird.

Mit dem Anspruch 6 wird eine vorteilhafte Ausgestaltung empfohlen, wonach das Verbindungsstück in an sich bekannter Weise seitliche Führungswände besitzt, welche die seitlichen Abstände zwischen der Wischstange und der ersten bzw. der zweiten Seitenwand des Verbindungsabschnittes des Tragbügels ausfüllen bzw. überbrücken können. Dadurch wird beim Betrieb des Scheibenwischers eine gute seitliche Führung des Tragbügels bzw. des Wischblattes am Wischarm erreicht. In an sich bekannter Weise können diese seitlichen Führungswände zusätzlich mit seitlich federnden Abschnitten ausgestattet sein, welche geeignet sind, ein toleranzbedingtes seitliches Spiel zwischen den Seitenwänden des Verbindungsabschnittes und der Wischstange auszugleichen.

Besonders dann, wenn vorgesehen ist, einen aus Kunststoff hergestellten Wischarm mit einem Wischblatt, dessen Tragbügelsystem vorzugsweise ebenfalls aus Kunststoff gefertigt ist, zu verbinden, wird eine vorteilhafte Ausgestaltung gemäß Anspruch 8 empfohlen, wonach das Verbindungsstück einstückig mit dem Wischarm gefertigt ist.

Weiterer Vorteil und Einzelheiten der Erfindung werden in den nachfolgenden Ausführungsbeispielen näher beschrieben. In den zugehörigen Zeichnungen zeigen:
- Fig. 1: eine Seitenansicht eines Wischblattes,
- Fig. 2: in Draufsicht einen Tragbügel eines Wischblattes in vergrößerter Darstellung gegenüber Figur 1,
- Fig. 3: in Schnittdarstellung ein Ausführungsbeispiel einer erfindungsgemäßen Wischarm-Wischblattverbindung, und
- Fig. 4: eine Seitenansicht der Wischarm-Wischblattverbindung gemäß Figur 3 in Richtung des Pfeiles Y.

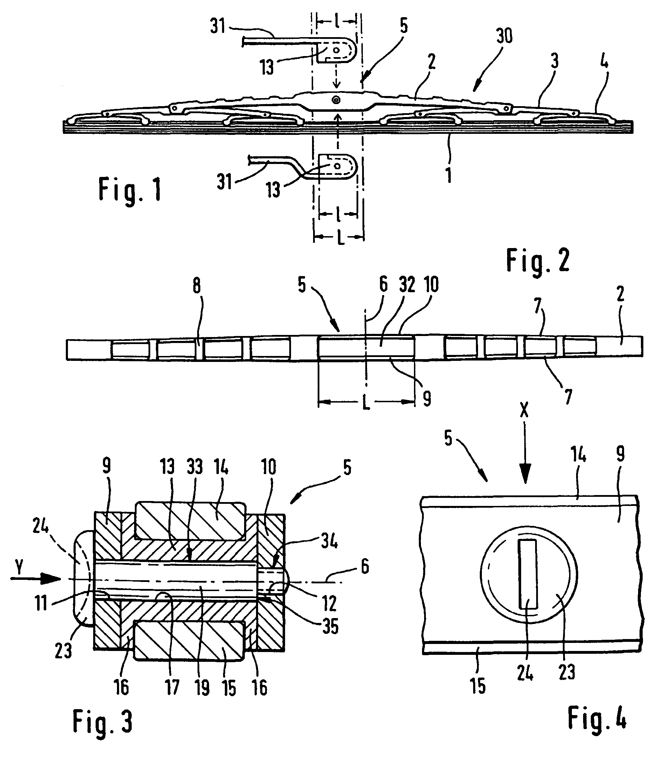

In Figur 1 ist ein Wischblatt 30 eines Fahrzeugscheibenwischers dargestellt, bei welchem eine gummielastische Wischleiste 1 an einem Tragbügelsystem gehalten und geführt ist. Das Tragbügelsystem besteht aus einem Tragbügel 2, zwei Zwischenbügeln 3 und vier Krallenbügeln 4, wobei die Zwischenbügel 3 schwenkbar mit dem Tragbügel 2 und die Krallenbügel 4 schwenkbar mit den Zwischenbügeln 3 verbunden sind. Im Betriebszustand am Fahrzeug liegt die Wischleiste 1 auf der zu wischenden Scheibe auf, deshalb wird in der Beschreibung die Seite bzw. Richtung des Wischblattes 30, an welcher sich die Wischleiste 1 befindet, als "unten" und die Seite bzw. Richtung des Wischblattes 30, an welcher sich der Tragbügel 2 befindet, als "oben" bezeichnet. Etwa mittig in Bezug auf die Längserstreckung des Tragbügels 2 ist an diesem ein Verbindungsabschnitt 5 vorgesehen, welcher zum schwenkbaren Verbinden des Wischblattes 30 mit dem Wischarm 31 eines Fahrzeugscheibenwischers bestimmt ist. Die herzustellende lösbare Wischarm-Wischblattverbindung soll so ausgestaltet sein, daß das Wischblatt 30 relativ zum Wischarm 31 um eine quer zum Wischblatt 30 bzw. zum Tragbügel 2 verlaufende geometrische Achse 6 (Figur 2) verschwenkbar ist.

Aus Figur 2 ist ersichtlich, daß der Tragbügel 2 des Wischblattes 30 im wesentlichen von zwei Seitenwänden 7 gebildet wird, die durch einen mehrfach durchbrochenen Rücken 8 miteinander verbunden sind. Der Verbindungsabschnitt 5 des Tragbügels 2 wird von einer ersten Seitenwand 9 und einer zweiten Seitenwand 10 gebildet, welche gleichzeitig Bestandteile der Seitenwände 7 des Tragbügels 2 sind. Die erste und die zweite Seitenwand 9 und 10 sind in einem bestimmten Abstand voneinander angeordnet und verlaufen parallel zueinander. Der Verbindungsabschnitt 5 des Tragbügels 2 ist also nach oben und nach unten offen. Außerdem ist aus Figur 2 zu erkennen, daß die bereits erwähnte geometrische Achse 6 quer zu der ersten und der zweiten Seitenwand 9 und 10 des Verbindungsabschnittes 5 verläuft.

In Fig. 1 ist noch dargestellt, daß zur Herstellung der Wischarm-Wischblattverbindung je nach Gestaltung des mit dem Verbindungsstück 13 ausgestatteten Wischarmes 31 das Wischarmende mit dem Verbindungsstück 13 senkrecht von oben oder von unten in Richtung des jeweiligen gestrichelten Pfeiles in den Befestigungsabschnitt 5 des Tragbügels 2 eingeführt wird. Da wegen der Verwendung der als Gelenkbolzen ausgebildeten Schraube 19 bei der Herstellung der Wischarm-Wischblattverbindung kein Verdrehen des Wischblattes 30 zum Wischarm 31 wie bei den eingangs beschriebenen, bekannten Wischarm-Wischblattverbindungen erforderlich ist, kann die Länge L der Öffnung 32 im Rücken 8 des Tragbügels 2 bzw. die Länge L des Verbindungsabschnittes 5 in Anpassung an die Länge 1 des mit dem Verbindungsstück 13 ausgestatteten Wischarmendes sehr klein gehalten werden. Wegen der Art der Einführung des Verbindungsstückes 13 von oben oder von unten in den Verbindungsabschnitt 5 ohne zusätzliche Drehung braucht die Länge L nur wenig größer zu sein als die Länge 1. Damit wird eine verbesserte Wischqualität durch eine verbesserte seitliche Führung des Wischblattes 30 am Verbindungsstück 13 erreicht.

Wesentliche Einzelheiten der erfindungsgemäßen lösbaren Wischarm-Wischblattverbindung sind aus.den Figuren 3 und 4 ersichtlich.

In Figur 3 sind die erste Seitenwand 9 und die zweite Seitenwand 10 des Verbindungsabschnittes 5 erkennbar. Die erste Seitenwand 9 weist eine größere erste Lagerbohrung 11 auf, welche die erste Seitenwand 9 durchdringt. Eine zweite Bohrung 12 mit kleinerem Durchmesser durchdringt die zweite Seitenwand 10 des Verbindungsabschnittes 5. Beide Bohrungen 11 und 12 sind koaxial zu der geometrischen Achse 6 angeordnet.

Zwischen die beiden Seitenwänden 9 und 10 des Verbindungsabschnittes 5 ist ein Verbindungsstück 13 eingebracht, welches in an sich bekannter Weise an dem zu einem U-förmigen Haken umgebogenen Ende der Wischstange 14 angeordnet und gehalten ist. Im vorliegenden Fall umgreift also das hakenförmige Ende der Wischstange 14 das Verbindungsstück 13 so, daß der von der Wischstange 14 gebildete Schenkel auf der Oberseite des Verbindungsstückes 13 und der umgebogene Schenkel 15 an der Unterseite des Verbindungsstückes 13 anliegt. Das Verbindungsstück 13 ist außerdem mit den seitlichen Führungswänden 16 ausgestattet, welche einerseits an den Flanken der Wischstange 14 bzw. des Schenkels 15 und andererseits an der Innenfläche der ersten bzw. der zweiten Seitenwand 9 bzw. 10 des Verbindungsabschnittes 5 anliegen und somit eine gute seitliche Führung des Wischblattes am Wischarm gewährleisten. Für einen toleranzbedingten Spielausgleich können die Führungswände 16 außerdem noch mit elastisch federnden Bereichen ausgestattet sein.

Aus Figur 3 ist weiterhin ersichtlich, daß das Verbindungsstück 13 eine koaxial zu der geometrischen Achse 6 angeordnete Durchgangsbohrung 17 aufweist. Der Durchmesser dieser Durchgangsbohrung 17 des Verbindungsstückes 13 ist größer als die zweite Bohrung 12 in der zweiten Seitenwand 10. Der Durchmesser der ersten Lagerbohrung 11 in der ersten Seitenwand 9 entspricht dem Durchmesser der Durchgangsbohrung des Verbindungsstückes 13. Als Gelenkbolzen der dargestellten lösbaren Wischarm-Wischblattverbindung dient eine Schraube 19, die ebenfalls koaxial zu der geometrischen Achse 6 angeordnet ist, die die erste Durchangsbohrung 11 durgreift und mit einem an ihrem vorderen Ende ausgebildeten Gewindeabschnitt 34 fest in die mit Innengewinde ausgestaltete Bohrung eingeschraubt ist. Die Schraube 19 ist länger als die Breite des Verbindungsstückes 13. Sie besitzt einen zylindrischen Lagerabschnitt 33, welcher sich bis zur zweiten Seitenwand 10 erstreckt. Die Schraube 19 ist, nachdem das an der Wischstange 14 fixierte Verbindungsstück 13 in Richtung des Pfeiles X (Figur 4) in den Verbindungsabschnitt 5 des Tragbügels 2 eingebracht und koaxial zu der Achse 6 ausgerichtet worden ist, in Richtung des Pfeiles Y durch die erste Lagerbohrung 11 in die Durchgangsbohrung 17 des Verbindungsstückes 13 hindurch mit dem Gewindeabschnitt 34 in die zweite Bohrung 12 eingeschraubt worden. Der Lagerabschnitt 33 ist in der zugehörigen ersten Lagerbohrung 11 bzw. Durchgangsbohrung 17 drehbar angeordnet. Es versteht sich von selbst, daß der Durchmesser des Lagerabschnittes 33 der Schraube 19 an die Durchmesser der ersten Lagerbohrung 11 und Durchgangsbohrung 17 angepaßt ist.

Insbesondere aus Figur 4 ist außerdem noch ersichtlich, daß in den Schraubenkopf 23 ein sogenannter Münzschlitz 24 eingearbeitet ist, welcher das Lösen oder Befestigen der Schraube 19 in einfacher Weise mittels einer Münze, d.h. ohne ein spezielles Werkzeug, ermöglicht.

Zum Auswechseln des Wischblattes wird also zunächst die Schraube 19 gelöst und entgegen der Richtung des Pfeiles Y aus dem Verbindungsabschnitt 5 entfernt. Nunmehr wird die von dem an der Wischstange 14 angebrachten Verbindungsstück gebildete Baueinheit in der dem Pfeil X (Figur 4) entgegengesetzten Richtung aus dem Verbindungsabschnitt 5 des Tragbügels 2 entfernt. In den Tragbügel 2 des neuen Wischblattes wird nunmehr das an der Wischstange 14 befestigte Verbindungsstück 13 in Richtung des Pfeiles X, d.h. von oben her, in den Verbindungsabschnitt 5 eingeschoben und zumindest annähernd koaxial zu der geometrischen Achse 6 ausgerichtet. Dann wird die als Gelenkbolzen dienende Schraube 19 in Richtung des Pfeiles Y durch die erste Lagerbohrung 11 hindurchgeführt und fest in die zweite Bohrung 12 der Seitenwand 10 eingeschraubt.

Der erforderlich starke aber lösbare Kraftschluß zwischen der Schraube 19 und dem Tragbügel 2 wird durch die kraftschlüssige Anlage der Stirnseite 35 des zylindrischen Lagerabschnittes 33 der Schraube 19 an der Innenseite der zweiten Seitenwand 10 des Verbindungsabschnittes 5 erreicht. Die Stirnseite 35 wird dadurch gebildet, daß der Durchmesser des Gewindeabschnittes 34 kleiner ist als der Durchmesser des mittleren, zylindrischen Lagerabschnittes 33 der Schraube 19.

Die Länge des Bereiches der Schraube 19 zwischen der Unterseite des mit einem Münzschlitz 24 versehenen Schraubenkopfes 23 und der Stirnseite 35 des Lagerabschnittes 33 entspricht der Dicke des Verbindungsstückes 13 plus der Dicke der ersten Seitenwand 9. Deshalb liegt der Schraubenkopf 23 an der Außenseite der ersten Seitenwand 9 an, so daß der Abstand zwischen der ersten und zweiten Seitenwand 9 und 10 zusätzlich durch die Schraube 19 fixiert ist. Ergebnis hiervon ist eine verbesserte Seitenführung des Wischblattes 30 am Verbindungsstück 13 bzw. Wischarm 33, wobei jedoch darauf zu achten ist, daß durch die Schraube 19 kein Kraftschluß zwischen dem Verbindungsstück 13 und der ersten und zweiten Seitenwand 9 und 10 hergestellt wird.

Es wird noch darauf hingewiesen, daß bei den Ausführungsbeispielen gemäß Figur 3 der Tragbügel 2, und somit die erste und die zweite Seitenwand 9 und 10 des Verbindungsabschnittes 5 aus Metall oder aus Kunststoff bestehen kann. Wenn der Tragbügel 2 aus Metall gefertigt ist, wird empfohlen eine aus Kunststoff hergestellte Schraube 19 zu verwenden, welche als Gelenkbolzen dient. Bei Verwendung einer Schraube aus Metall wären vermutlich zusätzliche Kunststoffbuchsen zwischen den Lagerbohrungen 11 und 12 und dem zugehörigen Lagerabschnitt 33 erforderlich, um ein geeignetes verschleiß- und geräuscharmes Gleitlager zu bilden. Wenn dagegen der Tragbügel 2 des Wischblattes aus Kunststoff gefertigt ist, ist es gleichgültig, ob die als Gelenkbolzendienende Schraube 19 aus Kunststoff oder aus Metall gefertigt ist. Eine Schraube 19 aus Kunststoff besitzt den Vorteil, daß sie leichter ist und außerdem billiger herstellbar ist. Eine Schraube 19 aus Metall hingegen hat den Vorteil einer größeren Formstabilität und Haltbarkeit.

## Patentansprüche

1. Lösbare Wischarm-Wischblattverbindung an einem Fahrzeugscheibenwischer, wobei das Wischblatt (30) einen Tragbügel (2) aufweist, an dem direkt oder über weitere untergeordnete Bügel (3,4) eine Wischleiste (1) zum Überstreichen der zu wischenden Scheibe geführt ist und der einen Verbindungsabschnitt (5) zum schwenkbaren Verbinden mit einem Wischarm (31) besitzt, wobei der Verbindungsabschnitt (5) von einer ersten Seitenwand (9) und einer von dieser ersten Seitenwand (9) beabstandeten und parallel zu dieser angeordneten zweiten Seitenwand (10) gebildet ist, und wobei an dem Wischarm (31) ein Verbindungsstück (13) vorgesehen ist, welches in dem Verbindungsabschnitt (5) des Tragbügels (2) zwischen den beiden Seitenwänden (9, 10) um eine quer zu diesen beiden Seitenwänden (9, 10) verlaufende geometrische Achse (6) relativ zum Tragbügel (2) verdrehbar angeordnet und mit dem Tragbügel (2) verbunden ist, indem eine als Gelenkbolzen dienende Schraube (19) in einer koaxial zu der geometrischen Achse (6) angeordneten ersten Durchgangsbohrung (11) in der ersten Seitenwand (9) des Verbindungsabschnittes (5) und in einer koaxial zu der geometrischen Achse (6) angeordneten zweiten Bohrung (12) in der zweiten Seitenwand (10) des Verbindungsabschnittes (5) und mit einem zylindrischen Lagerabschnitt (33) in einer Durchgangsbohrung (17) des Verbindungsstückes (13) angeordnet ist, dadurch **gekennzeichnet,** daß die Schraube (19) derartig mit einem an ihrem vorderen Ende ausgebildeten Gewindeabschnitt (34) in die mit Innengewinde ausgestattete zweite Bohrung (12) des Verbindungsabschnittes (5) des Tragbügels eingeschraubt ist, daß zwischen der Schraube (19) und dem Tragbügel (2) ein lösbarer Kraftschluß gebildet ist, der jedoch so stark ist, daß er nicht durch die beim relativen Verdrehen des Tragbügels (2) gegenüber dem Wischarm auftretenden Reibungskräfte lösbar ist.

2. Wischarm-Wischblattverbindung nach Anspruch 1, dadurch **gekennzeichnet,** daß der lösbare Kraftschluß durch die an der Innenseite der zweiten Seitenwand (10) des Verbindungsabschnittes (5) kraftschlüssig anliegenden Stirnseite (35) des Lagerabschnittes (33) der Schraube (19) erzeugt wird.

3. Wischarm-Wischblattverbindung nach einem der vorhergehenden Ansprüche, dadurch **gekennzeichnet,** daß die Schraube (19) an ihrem hinteren Ende einen Schraubenkopf (23), vorzugsweise mit Münzschlitz (24), besitzt und daß die Länge des Abschnittes der Schraube (19) zwischen der Unterseite des Schraubenkopfes (23) und der Stirnseite ihres Lagerabschnittes (33) der Breite des Verbindungsstückes (13) plus der Dicke der ersten Seitenwand (9) des Verbindungsabschnittes (5) des Tragbügels (2) entspricht.

4. Wischarm-Wischblattverbindung nach einem der vorhergehenden Ansprüche, dadurch **gekennzeichnet,** daß die zweite Bohrung (12) in der zweiten Seitenwand (10) des Verbindungsabschnittes (5) als Sackloch ausgebildet und an der Außenseite der zweiten Seitenwand (10) geschlossen ist.

5. Lösbare Wischarm-Wischblattverbindung nach einem der vorhergehenden Ansprüche, dadurch **gekennzeichnet,** daß das Verbindungsstück (13) ein separat gefertigtes Bauteil aus Kunststoff ist und, vorzugsweise rastend, in den von einem als U-artiger Haken umgebogenen Ende einer Wischstange (14) gebildeten Raum eingesetzt ist.

6. Lösbare Wischarm-Wischblattverbindung nach Anspruch 5 oder 11, dadurch **gekennzeichnet,** daß das Verbindungsstück (13) seitliche Führungswände (16) besitzt, die die seitlichen Abstände zwischen der Wischstange (14,15) und der ersten bzw. der zweiten Seitenwand (9 bzw. 10) des Verbindungsabschnittes (5) des Tragbügels (2) ausfüllen bzw. überbrücken.

7. Lösbare Wischarm-Wischblattverbindung nach einem der vorhergehenden Ansprüche, dadurch **gekennzeichnet,** daß das Verbindungsstück (13) an die Wischstange (14) eines Wischarmes angegossen bzw. durch Spritzgießen angespritzt ist.

8. Wischarm-Wischblattverbindung nach einem der vorhergehenden Ansprüche, dadurch **gekennzeichnet,** daß der Wischarm aus Kunststoff gefertigt ist und das Verbindungsstück (13) einstückig mit dem Wischarm (31) gefertigt ist.

9. Wischarm-Wischblattverbindung nach einem der vorhergehenden Ansprüche, dadurch **gekennzeichnet,** daß der Tragbügel (2) und gegebenfalls die anderen zum Traggestell des Wischblattes (30) gehörenden untergeordneten Bügel und/oder die als Gelenkbolzen dienende Schraube (19) aus Kunststoff besteht.

10. Wischarm-Wischblattverbindung nach einem der vorhergehenden Ansprüche, dadurch **gekennzeichnet,** daß die Öffnung (32) des Verbindungsabschnittes (5) des Tragbügels (2) eine Länge (L) aufweist, die nur geringfügig länger ist als die Länge (1) des mit dem Verbindungsstück (13) ausgestatteten Wischarmendes, so daß dieses mit dem Verbindungsstück (13) ausgestattete Wischarmende je nach dessen Ausgestaltung entweder senkrecht von oben oder senkrecht von unten zur Herstellung der Wischarm-Wischblattverbindung in den Verbindungsabschnitt (5) des Tragbügels (2) einbringbar ist.

## Claims

1. Detachable wiper arm-wiper blade connection on an automotive windshield wiper, in which the wiper blade (30) has a bracket (2), by which a wiper strip (1) for wiping across the windshield to be wiped is guided directly or is guided by means of additional secondary supports (3, 4), the bracket has a connecting segment (5) for a pivoting connection with a wiper arm (31), where the connecting segment (5) is formed by a first side wall (9) and a second side wall (10) at a distance from and parallel to this first side wall (9), a connector (13) is provided on the wiper arm (31) and this connector (13) is arranged in the connecting segment (5) of the bracket (2) between the two side walls (9, 10) to rotate relative to the bracket (2) around a geometric axis running transverse to these two side walls (9, 10) and is connected to the bracket (2), and a screw (19) serving as the hinge pin is arranged in a first through-hole (11) coaxial with the geometric axis (6) in the first side wall (9) of the connecting segment (5) and in a second hole (12) coaxial with the geometric axis (6) in the second side wall (10) of the connecting segment (5), and is arranged with a cylindrical bearing segment (33) in a through-hole (17) of the connector (13), characterized in that the screw (19) with a thread section (34) on its forward end is screwed into the second hole (12), designed with an inside thread, of the connecting segment (5) of the bracket, so that between the screw (19) and the bracket (2) a releasable frictional engagement is created which is, however, strong enough that it cannot be released by the frictional forces arising from the rotation of the bracket (2) relative to the wiper arm.

2. Wiper arm-wiper blade connection according to claim 1, characterized in that the releasable frictional engagement is created by the front face (35) of the bearing segment (33) of the screw (19) in force-engaged contact with the inside of the second side wall (10) of the connecting segment (5).

3. Wiper arm-wiper blade connection according to one of the preceding claims, characterized in that the screw (19) has on its rear end a screw head (23), preferably with a coin slot (24), and the length of the segment of the screw (19) between the underside of the screw head (23) and the front face of its bearing segment (33) corresponds to the width of the connector (13) plus the thickness of the first side wall (9) of the connecting segment (5) of the bracket (2).

4. Wiper arm-wiper blade connection according to one of the preceding claims, characterized in that the second hole (12) in the second side wall (10) of the connecting segment (5) is designed as a blind hole and is closed on the outside of the second side wall (10).

5. Wiper arm-wiper blade connection according to one of the preceding claims, characterized in that the connector (13) is a separately manufactured component of plastic, preferably as a snap lock, and inserted into the area formed by an end of a wiper rod (14) bent in a U-shape.

6. Wiper arm-wiper blade connection according to claim 5, characterized in that the connector (13) has side guide walls (16) which bridge or fill up the lateral distances between the wiper rod (14, 15) and the first and second side walls (9 or 10) of the connecting segment (5) of the bracket (2).

7. Wiper arm-wiper blade connection according to one of the preceding claims, characterized in that the connector (13) is cast in one piece with the wiper rod (14) of a wiper arm or injection molded onto it.

8. Wiper arm-wiper blade connection according to one of the preceding claim, characterized in that the wiper arm is made of plastic and that the connector (13) is made in one piece with the wiper arm (31).

9. Wiper arm-wiper blade connection according to one of the preceding claims, characterized in that the bracket (2) and optionally other subordinate brackets belonging to the framework of the wiper blade (30) and/or the screw (19) serving as the hinge pin (19) are made of plastic.

10. Wiper arm-wiper blade connection according to one of the preceding claims, characterized in that the opening (32) of the connecting segment (5) of the bracket (2) has a length (L) only slightly longer than the length (l) of the wiper arm end fitted with the connector (13), so that this wiper arm end fitted with the connector (13), according to the design, can be introduced into the connecting segment (5) of the bracket (2) either vertically from above or vertically from below to create the wiper arm-wiper blade connection.

## Revendications

1. Assemblage amovible bras de monture-raclette d'essuie-glace pour essuie-glace de véhicule, dans lequel la raclette d'essuie-glace (30) présente a étrier de support (2), sur lequel est guidée, directement ou par l'entremise d'autres étriers secondaires (3, 4), a balai d'essuie-glace (1) pour enduire sur la vitre à essuyer et qui possède une section d'assemblage (5) pour se relier à pivotement à un bras de monture (31), la section d'assemblage (5) étant formée d'une première paroi latérale (9) et d'une seconde paroi latérale (10) espacée de cette première paroi latérale (9) et parallèle à celle-ci, en prévoyant sur le bras de monture (31) une pièce d'assemblage (13), qui est montée dans la section d'assemblage (5) de l'étrier de support (2) entre les deux parois latérales (9, 10) à rotation par rapport à l'étrier de support (2) autour d'un axe géométrique (6) s'étendant transversalement à ces deux parois latérales (9, 10) et est reliée à l'étrier de support (2), en agençant une vis (19) servant d'axe d'articulation dans un premier alésage traversant (11) agencé coaxialement à l'axe géométrique (6) dans la première paroi latérale (9) de la section d'assemblage (5) et dans un second alésage (12) agencé coaxialement à l'axe géométrique (6) dans la seconde paroi latérale (10) de la section d'assemblage (5) et avec une section de palier cylindrique (33) dans un alésage traversant (17) de la pièce d'assemblage (13), caractérisé en ce que la vis (19) est vissée par la section filetée (34) formée à son extrémité avant dans le second alésage (12) équipé d'un filet intérieur de la section d'assemblage (5) de l'étrier de support, de telle sorte qu'il se forme entre la vis (19) et l'étrier de support (2) une liaison adhérente amovible qui est cependant assez forte pour que cette liaison ne puisse pas se défaire sous l'effet des forces de frottement se produisant lors de la rotation relative de l'étrier (2) par rapport au bras de monture.

2. Assemblage bras de monture-raclette d'essuie-glace selon la revendication 1, caractérisé en ce que la liaison adhérente amovible est produite par la face avant (35) de la section de palier (33) de la vis (19) s'appliquant de manière adhérente sur la face intérieure de la seconde paroi latérale (10) de la section d'assemblage (5).

3. Assemblage bras de monture-raclette d'essuie-glace selon l'une quelconque des revendications précédentes, caractérisé en ce que la vis (19) possède, à son extrémité arrière, une tête de vis (23), de préférence avec une fente pour pièce de monnaie (24), et en ce que la longueur de la section de la vis (19) comprise entre la face inférieure de la tête de vis (23) et la face avant de sa section de palier (33) correspond à la largeur de la pièce d'assemblage (13) plus l'épaisseur de la première paroi latérale (9) de la section d'assemblage (5) de l'étrier de support (2).

4. Assemblage bras de monture-raclette d'essuie-glace selon l'une quelconque des revendications précédentes, caractérisé en ce que le second alésage (12) de la seconde paroi latérale (10) de la section d'assemblage (5) est conformé en trou borgne et est fermé sur la face extérieure de la seconde paroi latérale (10).

5. Assemblage amovible bras de monture-raclette d'essuie-glace selon l'une quelconque des revendications précédentes, caractérisé en ce que la pièce d'assemblage (13) est un composant fabriqué séparément en matière plastique et est introduite de préférence par encliquetage, dans l'espace formé par une extrémité repliée en crochet en U d'une tige d'essuieglace (14).

6. Assemblage amovible bras de monture-raclette d'essuie-glace selon la revendication 5, caractérisé en ce que la pièce d'assemblage (13) possède des parois de guidage latérales (16) qui remplissent ou recouvrent les espacements latéraux entre la tige d'essuie-glace (14, 15) et la première ou la seconde paroi latérale (9 ou 10) de la section d'assemblage (5) de l'étrier de support (2).

7. Assemblage amovible bras de monture-raclette d'essuie-glace selon l'une quelconque des revendications précédentes, caractérisé en ce que la pièce d'assemblage (13) est coulée sur la tige d'essuie-glace (14) d'un bras de monture ou y est moulée par injection.

8. Assemblage bras de monture-raclette d'essuie-glace selon l'une quelconque des revendications précédentes, caractérisé en ce que le bras de monture est fabriqué d'une matière plastique et la pièce d'assemblage (13) est formée d'une seule pièce avec le bras de monture (31).

9. Assemblage bras de monture-raclette d'essuie-glace selon l'une quelconque des revendications précédentes, caractérisé en ce que l'étrier de support (2) et, le cas échéant, les autres étriers secondaires appartenant au châssis de support de la raclette d'essuie-glace (30) et/ou la vis (19) servant d'axe d'articulation sont constitués d'une matière plastique.

10. Assemblage bras de monture-raclette d'essuie-glace selon l'une quelconque des revendications précédentes, caractérisé en ce que l'ouverture (32) de la section d'assemblage (5) de l'étrier de support (2) présente une longueur (L), qui est seulement à peine plus grande que la longueur (l) de l'extrémité du bras de monture équipée de la pièce d'assemblage (13), de telle sorte que cette extrémité du bras de monture équipée de la pièce d'assemblage (13) puisse être enfoncée, en fonction de sa conformation, verticalement par le haut ou verticalement par le bas pour instaurer l'assemblage bras de monture-raclette d'essuie-glace dans la section d'assemblage (5) de l'étrier de support (2).
